# EUROPEAN PATENT APPLICATION

(11) **EP 4 187 497 A1**
(43) Date of publication of application: **31.05.2023**
(21) Application number: 22209479.9
(22) Date of filing: 24.11.2022
(51) Int. Cl.: G06V 10/24, G06V 10/25, G06V 10/36, G06V 20/00

(54) **METHOD FOR IDENTIFYING A PATTERN IN A GRAPHICAL REPRESENTATION AND DEVICE FOR EXECUTING SUCH METHOD**

(30) Priority: 25.11.2021 IT 202100029825
(71) Applicant: RE S.p.A. Controlli Industriali, 20122 Milano (IT)
(72) Inventor: Spinoglio, Giovanni Antonio Arturo, 20122 Milano MI (IT)
(74) Representative: Perani & Partners S.p.A.

(57) **Abstract**

A method for identifying a pattern (100) in a graphical representation (101), comprising the steps of acquiring an image (1) of a graphical representation (101); processing the image (1) to reduce its resolution and obtain a subsampled image (2); correlating the subsampled image (2) with a subsampled pattern (3) to identify the position of the subsampled pattern (3) along a reading direction (A) within the subsampled image (2), and defining a subsampled intermediate result zone (4) wherein the subsampled image (2) substantially corresponds to the subsampled pattern (3); extracting from the image (1) an intermediate result zone (5) corresponding to the subsampled intermediate result zone (4); correlating the intermediate result zone (5) with the pattern (100) to identify the position of the pattern (100) along the reading direction (A) within the intermediate result zone (5); calculating the position of the pattern (100) in the image (1) from the position of the pattern (100) in the intermediate result zone (5).

## Description

The present invention relates to a method for identifying a pattern in a graphical representation, for example a barcode, and to a corresponding device adapted to perform such a method. The method according to the present invention can in particular be used in the context of processing operations, for example printing, of a material provided as a continuous sheet and turned by a reel.

In the state of the art, it is known to perform processes, treatments, prints or other operations on a continuous sheet material, which is generally turned by a reel. Such material may be paper, cloth, plastic, metal, or a multilayer material comprising a combination of one or more of such materials, or otherwise.

Generally, whatever the operation to be performed, a very precise positioning of the sheet is required. For example, a printing operation, perhaps in several different phases, or a printing operation followed by a cut. Consequently, good control of the feed rate is needed as well as the ability to detect and correct any position errors in advance.

For this purpose, it is also known in the state of the art to print a barcode on the sheet of continuous material, generally at or near the edge. The barcode uniquely identifies its position on the continuous sheet, and is monitored by an appropriate sensor. Periodically, the sensor detects an image of the barcode and, to identify the position accurately, searches for a motif (referred to as a "pattern" in the technical jargon of the field) within the image. Once this pattern is detected, the sensor supplies an implant control system with the precise position of the sheet, so that the system can perform the necessary adjustments.

In greater detail, the pattern identification method that is employed in the state of the art relies on a simple scanning of the image detected by the sensor. Each portion of the image is compared with the pattern, for example using the method of least squares. When the part of the image closest to the provided pattern is identified, its position is provided by the sensor to the control system.

In the context of continuous processing, the identification of the pattern must be performed several times and substantially in real time. Therefore, computational efficiency is a central aspect, since a more numerically efficient algorithm could allow the use of electronics with lower performance, thus lowering costs.

### SUMMARY OF THE INVENTION

In this context, the technical task underlying the present invention is to propose a method for identifying a pattern in a graphical representation which overcomes the drawbacks of the above-mentioned prior art.

In particular, it is an object of the present invention to provide a method for identifying a pattern in a graphical representation capable of ensuring greater efficiency from a numerical point of view.

The specified technical task and purposes are substantially achieved by a method for identifying a pattern in a graphical representation, comprising the technical characteristics set forth in one or more of the appended claims.

This method solves the technical problem because the subsampling of the image of the graphical representation drastically reduces the comparison operations. For example, in the state of the art the individual comparisons to be performed on an image having a size of 512 pixels to search for a pattern having a size of 128 pixels are equal to (512 - 128) * 128, i.e. 49,152. In the method according to the invention, by subsampling the image by a factor of 8, the operations to be performed are (64 - 16) * 16 = 768 for the comparison between the subsampled pattern and the subsampled image. In the comparison between the identified image portion and the pattern, the operations to be performed are 128 * 8, that is 1,024. Thus, the method according to the invention makes it possible to obtain the same result as the prior art, while performing only 1,792 operations instead of 49,152. Even considering the execution of the subsampling operations, the efficiency gain is still considerable.

### LIST OF FIGURES

Further features and advantages of the present invention will become clearer from the indicative, and therefore non-limiting, description of a preferred but non-exclusive embodiment of a method for identifying a pattern in a graphical representation, as illustrated in the appended figures, wherein:
- Figure 1a shows an image of a first graphical representation, in particular of a barcode processed by the method according to the present invention;
- Figure 1b shows the image of Figure 1a after the application of a blur filter;
- Figure 1c shows the image of Figure 1a after the application of a blur filter and a subsampling;
- Figure 2a shows a pattern to be searched for in the image of Figure 1a;
- Figure 2b shows the pattern of Figure 2a after application of a blur filter;
- Figure 2c shows the pattern of Figure 2 after the application of a blur filter and a subsampling;
- Figure 3a shows the comparison between the subsampled pattern of Figure 2c and the subsampled image of Figure 1c;

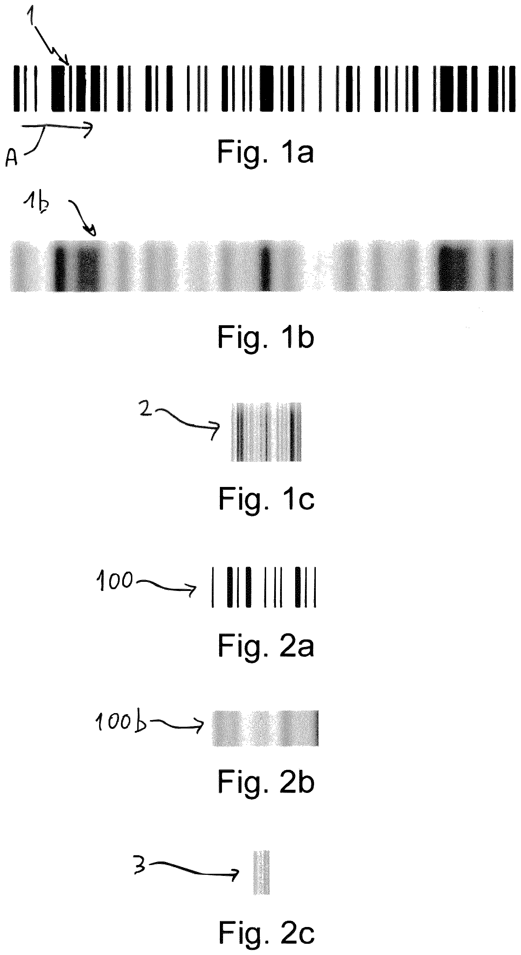

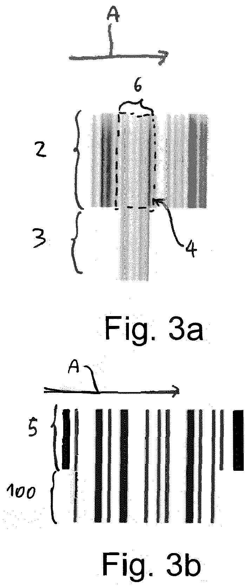

- Figure 3a shows the comparison between the pattern of Figure 2a and the result of the comparison of Figure 3 a;

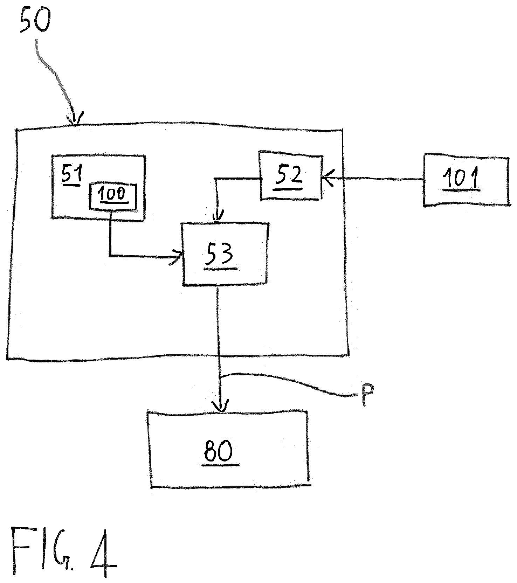

- Figure 4 shows a schematic representation of the operation of a device configured to perform the method according to the present invention;

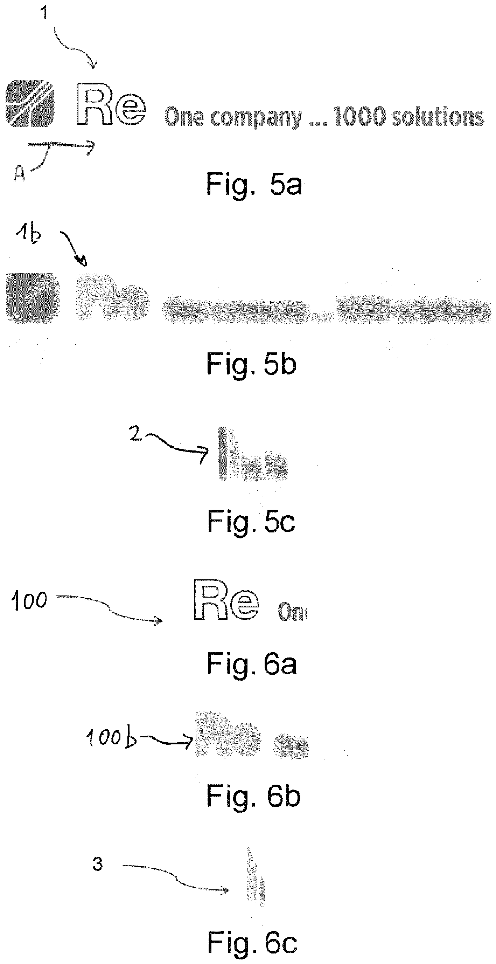

- Figure 5a shows an image of a second graphical representation processed by the method according to the present invention;
- Figure 5b shows the image of Figure 5a after the application of a blur filter;
- Figure 5c shows the image of Figure 5a after the application of a blur filter and a subsampling;
- Figure 6a shows a pattern to be searched for in the image of Figure 5a;
- Figure 6b shows the pattern of Figure 6a after the application of a blur filter.

### DETAILED DESCRIPTION

With reference to the accompanying Figures, a method for identifying a pattern 100 in a graphical representation 101 in accordance with the present invention is described below.

Purely by way of example, the graphical representation 101 can be a barcode. In the context of the present disclosure, the barcode is defined by a sequence of bars having varying widths, separated by gaps of varying widths. The bars and gaps are arranged perpendicular to a reading direction "A", as shown for example in Figure 1a. This barcode can be expanded for any length along the reading direction "A", depending on the specific application. Note that it is not necessary for the barcode to encode any information, however it is not excluded that this may occur.

Note that, in this case, the pattern 100 is also defined by a sequence of bars separated by gaps. In particular, the pattern 100 comprises a shorter sequence of bars and gaps than the barcode defining the graphical representation 101. In particular, the pattern 100 corresponds to a sequence present in the barcode, the position of which is however not known or is only approximately known.

More generally, the graphical representation 101 can be of any type, provided that the reading direction "A" can be identified. In particular, the graphical representation 101 may be an image in colour, black and white, or grayscale. The graphical representation 101 may also be defined by any variable quality of the underlying support that may be varied, such as, for example, reflectivity and/or transparency.

The graphical representation 101, the pattern 100 and their applications are already known per se to the person expert in the field, and will therefore not be described further.

To locate the exact position of the pattern 100 within the graphical representation 101, the method according to the present invention comprises the step of acquiring an image 1 of the graphical representation 101. Such an image 1 may be captured through image acquisition means 52 of a reading device 50. Furthermore, the pattern 100 to be identified in the graphical representation 101 is recalled by a memory module 51, also part of the device 50. More details on the reading device 50 will be provided later in the description.

In detail, the image 1 and the pattern 100 are preferably rectangular. Therefore, both extend for a first dimension along the reading direction "A", and for a second dimension along a direction perpendicular to the reading direction "A".

Both the image 1 and the pattern 100 are digital, so both first and second dimensions are measured in points, pixels, or in another equivalent unit of measurement. The first dimension of the image 1 is larger than the first dimension of the pattern 100, while the second dimensions are generally identical.

The image 1 and the pattern 100 are compared to identify the position of the pattern 100 along the reading direction "A" in the graphical representation 101.

In a preliminary step of the comparison, the image 1 is processed to reduce its resolution and obtain a subsampled image 2. In particular, a blur filter is applied to the image 1, as shown for example in Figures 1b and 5b, so as to obtain a blurred image 1b. Such a filter is of the type commonly used in digital image processing programs, and is therefore known per se to the person expert in the field.

The image 1, in particular the blurred image 1b, is then subsampled after the blurring step. Such a subsampling procedure reduces the first dimension by a predetermined scale factor. By way of example, it is possible to reduce the first dimension by a factor of eight. Depending on the application, it will be possible to choose reduction factors having different values, but preferably integers.

It is noted that, similarly to the image processing 1, the same operations can be performed on the pattern 100, i.e. applying a blur filter as shown in Figures 2b and 6b to obtain a blurred pattern 100b. Subsequently, the pattern 100b is subsampled as shown in Figures 2c and 6c, so as to reduce its resolution and obtain a subsampled pattern 3. In particular, the reduction factor is the same as that used for the image 1.

The subsampled image 2 is then correlated with the subsampled pattern 3, so as to identify the position of the subsampled pattern 3 along the reading direction "A" within the subsampled image 2.

In more detail, in the subsampled image 2 a subsampled comparison zone 6 is selected, having a dimension along the reading direction "A" equal to a corresponding dimension of the subsampled pattern 3. In particular, initially the subsampled comparison zone 6 is selected at one of the ends of the subsampled image 2 along the reading direction "A".

Then a comparison parameter is calculated representative of the difference between the subsampled comparison zone 6 and the subsampled pattern 3. Preferably, the comparison parameter is calculated with the method of least squares.

Subsequently, the subsampled comparison zone 6 is advanced by a single pixel along the reading direction "A" towards the opposite end of the subsampled image 2 with respect to the starting end. Then the comparison parameter is recalculated.

The advancement of the subsampled comparison zone 6 and the calculation of the comparison parameter are alternated until the end of the sub-sampled image 2 is reached along the reading direction "A", i.e. until the opposite end of the sub-sampled image 2 with respect to the starting one is reached.

Among all the instances of the subsampled comparison zone 6 under consideration, the one corresponding to the lowest value of the comparison parameter is then selected and identified with the subsampled intermediate result zone 4. This subsampled intermediate result zone 4 is therefore the area of the subsampled image 2 which substantially corresponds to the subsampled pattern 3.

An intermediate result zone 5 is then extracted from the image 1, corresponding to the subsampled intermediate result zone 4 but having the original resolution of the image 1.

The intermediate result zone 5 is correlated with the pattern 100 having the original resolution, to identify the position of the pattern 100 along the reading direction "A" within the intermediate result zone 5. The correlation takes place in an iterative manner, substantially similar to the comparison performed between the subsampled pattern 3 and the subsampled image 2 described above. Note that the number of iterations to be performed in this step is equal to the reduction factor between the image 1 and the subsampled image 2.

Once the pattern 100 has been identified in the intermediate result zone 5, it can be traced back to its position in the image 1.

The present invention further relates to a reading device 50 configured to identify the pattern 100 in the graphical representation.

The device 50 comprises image acquisition means 52, configured to acquire the image 1 in the graphical representation 101. For example, the image acquisition means 52 may comprise an optical sensor (not shown) which may be known per se to the person expert in the field.

The device 50 further comprises a memory module 51, in which the pattern 100 to be identified in the graphical representation 101 is preloaded.

A processing unit 53 is placed in signal communication with the image acquisition means 52 and the memory module 51. The processing unit 53 is configured to perform the method described above, and then process the position "P" of the pattern 100 within the graphical representation 101. This position "P" is sent to a control system 80 of an industrial process.

## Claims

1. Method for identifying a pattern (100) in a graphical representation (101), comprising the steps of:
- acquiring an image (1) of a graphical representation (101) having a reading direction (A) through image acquisition means (52) of a reading device (50);
- retrieving from a memory module (51) of the reading device (50) a pattern (100) to be identified in a graphical representation (101);
- comparing the image (1) and the pattern (100) to identify the position of the pattern (100) along the reading direction (A) in the graphical representation (101);
wherein the comparison step comprises the sub-steps of:
- processing the image (1) to reduce its resolution and obtain an undersampled image (2) by applying a blur filter;
- correlating the undersampled image (2) with an undersampled pattern (3) to identify the position of the undersampled pattern (3) along the reading direction (A) within the undersampled image (2) and define an undersampled intermediate result zone (4) in which the undersampled image (2) substantially corresponds to the undersampled pattern (3); the step of correlating the undersampled image (2) with an undersampled pattern (3) comprises the further sub-steps of:
∘ selecting in the undersampled image (2) an undersampled comparison zone (6) having a dimension along the reading direction (A) equal to a corresponding dimension of the undersampled pattern (3);
∘ calculating a comparison parameter representative of the difference between the undersampled comparison zone (6) and the undersampled pattern (3)
∘ advancing the undersampled comparison zone (6) by a single pixel along the reading direction (A);
∘ repeating the sub-step of calculating the comparison parameter;
- extracting from the image (1) an intermediate result zone (5) corresponding to the undersampled intermediate result zone (4);
- correlating the intermediate result zone (5) with the pattern (100) to identify the position of the pattern (100) along the reading direction (A) within the intermediate result zone (5);
- calculating the position of the pattern (100) in the image (1) starting from the position of the pattern (100) in the intermediate result zone (5)
**characterised in that** the step of correlating the undersampled image (2) with an undersampled pattern (3) comprises the sub-steps of:
- alternating the execution of the advancement step and the calculation step of the comparison parameter until the end of the undersampled image (2) is reached along the reading direction (A);
- selecting among all the instances of the undersampled comparison zone (6) the one corresponding to the lowest value of the comparison parameter and identify it with the undersampled intermediate result zone (4).

2. Method according to the preceding claim, **characterised in that** the step of processing the image (1) comprises an undersampling sub-step subsequent to the blurring step.

3. Method according to any of the preceding claims, **characterised in that** it comprises the further step of processing the pattern (100) to reduce its resolution and obtain the undersampled pattern (3) in which the same operations are performed on the pattern (100) as are performed on the image (1) in the image processing step (1) .

4. Method according to any of the previous claims, **characterised in that** the sub-step of calculating the comparison parameter is performed through the least squares method.

5. Reading device (50) for identifying a pattern (100) in a graphical representation (101), comprising:
- image acquisition means (52) configured to acquire an image (1) of a graphical representation (101) having a reading direction (A);
- a memory module (51) configured to hold a pattern (100) to be identified in a graphical representation (101);
- a processing unit (53) placed in signal communication with the image acquisition means (52) and with the memory module (51), the processing unit (53) being configured to perform the method according to any of the preceding claims.
